# EUROPÄISCHE PATENTSCHRIFT

(11) **EP 4 022 352 B1**
(45) Veröffentlichungstag und Bekanntmachung des Hinweises auf die Patenterteilung: **25.03.2026**
(21) Anmeldenummer: 20764335.4
(22) Anmeldetag: 26.08.2020
(51) Int. Cl.: G01S 17/02, G01S 17/931, G01S 7/481, G01S 7/497

(54) **AKTIVES OPTISCHES SENSORSYSTEM MIT TEMPERATURREGELUNG**
ACTIVE OPTICAL SENSOR SYSTEM WITH TEMPERATURE CONTROL
SYSTÈME DE CAPTEUR OPTIQUE ACTIF AVEC CONTRÔLE DE LA TEMPÉRATURE

(30) Priorität: 26.08.2019 DE 102019122774
(43) Veröffentlichungstag der Anmeldung: 06.07.2022
(73) Patentinhaber: Valeo Schalter und Sensoren GmbH, 74321 Bietigheim-Bissingen (DE)
(72) Erfinder: BEUTH, Thorsten, 74321 Bietigheim-Bissingen (DE); CABUK, Sercan, 74321 Bietigheim-Bissingen (DE); KETELSEN, Helge, 74321 Bietigheim-Bissingen (DE)
(74) Vertreter: Pothmann, Karsten
(86) Internationale Anmeldenummer: PCT/EP2020/073795
(87) Internationale Veröffentlichungsnummer: WO 2021/037879

(56) Entgegenhaltungen:
- EP-A1- 1 967 865
- JP-A- 2020 112 400
- US-A1- 2003 043 865
- US-A1- 2019 078 934

## Beschreibung

Die vorliegende Erfindung betrifft ein aktives optisches Sensorsystem mit Temperaturregelung, welches eine Lichtquelle aufweist, dazu eingerichtet, Licht in Richtung eines Objekts auszusenden sowie einen optischen Detektor, dazu eingerichtet, von dem Objekt reflektierte Anteile des Lichts zu detektieren, und ein optisches Filterelement, das in einem Empfangsstrahlengang für die reflektierten Anteile des Lichts angeordnet ist. Die Erfindung betrifft ferner ein entsprechendes Verfahren zur Temperaturregelung eines aktiven optischen Sensorsystems.

Aktive optische Sensorsysteme, wie beispielsweise Lidar-Systeme, können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen und so weiter.

Aus dem Dokument EP 1 967 865 A1 ist ein aktives optisches Sensorsystem mit Temperaturregelung bekannt.

Ein aktives optisches Sensorsystem weist eine Lichtquelle zum Aussenden von Licht und einen optischen Detektor zum Empfangen reflektierter Anteile des Lichts auf. Bei der Erhöhung der Umgebungstemperatur erwärmen sich diese Komponenten des Sensorsystems, was zu einer mechanischen Ausdehnung und/oder zur Veränderung interner physikalischer Parameter der Komponenten führen kann. Dies kann zur Folge haben, dass sich eine Emissionswellenlänge der Lichtquelle und/oder ein Transmissionsspektrum eines im Empfangsstrahlengang angeordneten Filterelements verschieben. In der Regel ist die Verschiebung für Filterelement und Lichtquelle jedoch unterschiedlich, sodass bei bekannten aktiven optischen Sensorsystemen Filterelemente mit einem abhängig von der Wellenlänge sehr breiten Transmissionsbereich eingesetzt werden, um sicherzustellen, dass die Licht mit der Emissionswellenlänge der Lichtquelle auch bei Temperaturschwankungen mit ausreichend hoher Intensität von dem Filterelement transmittiert wird.

Je größer der Wellenlängenbereich ist, bei dem das Filterelement eine hohe Transmission aufweist, desto höher ist jedoch auch der Einfluss von Rauschen, beispielsweise aufgrund von Umgebungslicht. Dies führt zu einem reduzierten Signal-Rausch-Verhältnis und dementsprechend zu einer reduzierten Genauigkeit und Zuverlässigkeit der Messergebnisse des aktiven optischen Sensorsystems.

Vor diesem Hintergrund ist es eine Aufgabe der vorliegenden Erfindung, ein verbessertes Konzept für ein aktives optisches Sensorsystem anzugeben, das zu einem geringeren Einfluss von Rauschen beziehungsweise zu einem erhöhten Signal-Rausch-Verhältnis führt.

Erfindungsgemäß wird diese Aufgabe gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, eine Quellentemperatur einer Lichtquelle des Sensorsystems in Abhängigkeit von einer Filtertemperatur eines Filterelements des Sensorsystems zu regeln.

Gemäß einem unabhängigen Aspekt des verbesserten Konzepts wird ein aktives optisches Sensorsystem mit Temperaturregelung angegeben. Das Sensorsystem weist eine Lichtquelle auf, die dazu eingerichtet ist, Licht in Richtung eines Objekts, insbesondere eines Objekts, das sich in einer Umgebung des Sensorsystems befindet, auszusenden. Das Sensorsystem weist wenigstens einen optischen Detektor auf, der dazu eingerichtet ist, von dem Objekt reflektierte Anteile des Lichts zu detektieren und ein optisches Filterelement, das in einem Empfangsstrahlgengang für die reflektierten Anteile des Lichts angeordnet ist. Das Sensorsystem weist eine Temperaturregelvorrichtung auf, die dazu eingerichtet ist, eine Quellentemperatur der Lichtquelle in Abhängigkeit von einer Filtertemperatur des Filterelements zu regeln.

Die Lichtquelle kann insbesondere als Laser ausgestaltet sein, beispielsweise als Laserdiode.

Das Sensorsystem kann insbesondere als Lidar-System ausgestaltet sein.

Der wenigstens eine Detektor kann beispielsweise als Photodiode, insbesondere als Avalanche-Photodiode, ausgestaltet sein.

Hier und im Folgenden kann der Begriff "Licht" derart verstanden werden, dass damit elektromagnetische Wellen im sichtbaren Bereich, im Infrarotbereich und/oder im ultravioletten Bereich umfasst sind. Dementsprechend kann auch der Begriff "optisch" derart verstanden werden, dass er sich auf Licht nach diesem Verständnis bezieht.

Das Licht, welches von der Lichtquelle ausgesendet wird, ist bevorzugt infrarotes Licht. Eine Emissionswellenlänge, also eine Maximum des Emissionsspektrums der Lichtquelle, liegt also im infraroten Spektralbereich, beispielsweise bei 905 nm oder 1200 nm.

Das Filterelement kann beispielsweise als Bandpassfilter ausgestaltet sein, wobei die Emissionswellenlänge der Lichtquelle sich innerhalb eines Transmissionsbandes des Bandpassfilters befindet.

Dass das Filterelement in dem Empfangsstrahlengang angeordnet ist, bedeutet insbesondere, dass Licht, welches von außerhalb des Sensorsystems auf eine aktive Oberfläche des wenigstens einen optischen Detektors trifft, das optische Filterelement passiert hat.

Bei der Quellentemperatur kann es sich um eine Temperatur in unmittelbarer Umgebung der Lichtquelle, beispielsweise um eine Temperatur eines Gehäuses der Lichtquelle oder eine Temperatur einer Wärmesenke, also eines Kühlkörpers auf dem die Lichtquelle angeordnet ist beziehungsweise mit dem die Lichtquelle verbunden ist, um gekühlt zu werden, handeln. Es kann sich auch um eine Temperatur der Lichtquelle selbst, also beispielsweise um eine Sperrschichttemperatur der Laserdiode oder eine Temperatur eines Schaltungsträgers oder einer Platine, auf der die Lichtquelle beziehungsweise die Laserdiode befestigt ist, handeln.

Das Filterelement dient insbesondere dazu, die reflektierten Anteile des Lichts, welche von der Lichtquelle ausgesendet wurden, selektiv mittels des wenigstens einen Detektors zu empfangen und sonstiges Licht, beispielsweise Umgebungslicht, möglichst zu unterdrücken, um den Einfluss von Rauschen bei einer Messung mittels des Sensorsystems zu reduzieren. Dementsprechend ist das Transmissionsspektrum des Filterelements auf die Emissionswellenlänge der Lichtquelle abgestimmt, sodass zumindest bei einer vorgegebenen Referenztemperatur die Emissionswellenlänge innerhalb eines Transmissionsbandes oder Transmissionsbereichs des Filterelements liegt.

Bei der Filtertemperatur kann es sich um eine Temperatur des Filterelements oder eine Temperatur in unmittelbarer Umgebung des Filterelements handeln.

Insbesondere ist die Temperaturregelvorrichtung dazu eingerichtet, die Filtertemperatur zu bestimmen und einen Sollwert für die Quellentemperatur basierend auf der bestimmten Filtertemperatur zu bestimmen, beispielsweise mittels einer Look-up-Tabelle. Die Temperaturregelvorrichtung regelt dann die Quellentemperatur auf den Sollwert.

Erfindungsgemäß wird die Quellentemperatur in Abhängigkeit von der Filtertemperatur dadurch geregelt, dass die Quellentemperatur auf einen Sollwert geregelt wird, der von der Filtertemperatur abhängt.

Durch Veränderung der Filtertemperatur insbesondere bezüglich einer vorgegebenen Nominaltemperatur für das Filterelement, also einer Temperatur, für welche ein Transmissionsspektrum des optischen Filterelements spezifiziert ist, verschiebt und/oder verändert sich das Transmissionsspektrum.

Da die Emissionswellenlänge und das Transmissionsspektrum des Filterelements aufeinander abgestimmt sind, kann es ohne Temperaturregelung nach dem verbesserten Konzept dazu kommen, dass sich die Emissionswellenlänge der Lichtquelle aus dem Transmissionsband oder Transmissionsbereich des Filterelements herausbewegt oder zumindest aus einem Bereich maximaler Transmission herausbewegt. Dies würde zu einer teilweisen oder vollständigen Unterdrückung von Licht mit einer Wellenlänge entsprechend der Emissionswellenlänge führen. Eine sinnvolle Messung wäre nicht mehr möglich. Ohne das verbesserte Konzept kann diesem Problem begegnet werden, indem das Transmissionsband des Filterelements entsprechend breit gewählt wird, sodass auch bei starken Temperaturschwankungen die Emissionswellenlänge stets innerhalb des Transmissionsbandes des Filterelements liegt.

Gemäß dem verbesserten Konzept wird jedoch anhand der filtertemperaturabhängigen Regelung der Quellentemperatur erreicht, dass die Emissionswellenlänge in kontrollierter Weise einer Verschiebung des Transmissionsspektrums des Filterelements nachgeführt werden kann. Dementsprechend kann erzielt werden, dass sich die Emissionswellenlänge stets in einem gewünschten Bereich des Transmissionsspektrums, also insbesondere im Transmissionsband und damit im Bereich maximaler Transmission des Filterelements, befindet.

Dadurch ist es möglich, die Breite des Transmissionsbandes oder den Transmissionsbereichs des Filterelements signifikant einzuschränken, da die temperaturabhängige Verschiebung bereits durch die Temperaturregelung nach dem verbesserten Konzept berücksichtigt wird.

Durch die Auswahl eines Filterelements mit geringerer Transmissionsbereite oder Bandbreite lässt sich das Signal-Rausch-Verhältnis für die Messung mittels des Sensorsystems verbessern, da ein entsprechend größerer Anteil von Licht mit nicht relevanter Wellenlängen ausgeblendet werden kann. Dies führt in der Konsequenz zu einer genaueren und zuverlässigeren Messung.

Nach dem verbesserten Konzept wird insbesondere die Quellentemperatur abhängig von der Filtertemperatur geregelt. In typischerweise verwendeten Materialsystemen für die Lichtquelle und das Filterelement ist eine temperaturabhängige Verschiebung der Emissionswellenlänge beispielsweise deutlich stärker ausgeprägt als die temperaturabhängige Verschiebung des Transmissionsspektrums des Filterelements. Daher ist durch Regelung der Quellentemperatur nur eine geringere Temperaturanpassung durch die Temperaturregelvorrichtung notwendig, als dies der Fall wäre, wenn anstatt der Quellentemperatur die Filtertemperatur abhängig von der Quellentemperatur geregelt würde.

Gemäß zumindest einer Ausführungsform des aktiven optischen Sensorsystems weist das Sensorsystem eine Verarbeitungseinheit auf, die dazu eingerichtet ist, einen Abtastpunkt des Objekts in Abhängigkeit von einem Detektorsignal zu erzeugen, wobei der wenigstens eine Detektor dazu eingerichtet ist, das Detektorsignal abhängig von den detektierten reflektierten Anteilen des Lichts zu erzeugen.

Der Abtastpunkt kann beispielsweise Koordinaten, insbesondere dreidimensionale Ortskoordinaten, eines entsprechenden Punkts des Objekts beinhalten, sowie gegebenenfalls, insbesondere bei Ausführung des Sensorsystems als LIDAR-System, eine Intensität des detektierten reflektierten Lichts. Basierend auf der Intensität kann, bei Kenntnis der Emissionswellenlänge, auf spektrale Eigenschaften des Objekts, beispielsweise seine Farbe, geschlossen werden.

Unter der Messung mittels des Sensorsystems kann insbesondere das Erzeugen des Abtastpunkts oder mehrerer Abtastpunkte in der beschriebenen Weise verstanden werden.

Gemäß zumindest einer Ausführungsform enthält die Temperaturregelvorrichtung einen ersten Temperatursensor, der eingerichtet und angeordnet ist, ein von der Filtertemperatur abhängiges erstes Sensorsignal zu erzeugen. Die Temperaturregelvorrichtung enthält einen zweiten Temperatursensor, der eingerichtet und angeordnet ist, ein von der Quellentemperatur abhängiges zweites Sensorsignal zu erzeugen. Die Temperaturregelvorrichtung ist dazu eingerichtet, die Quellentemperatur abhängig von dem ersten und dem zweiten Sensorsignal zu regeln.

Gemäß zumindest einer Ausführungsform ist die Temperaturregelvorrichtung, insbesondere eine Steuereinheit der Temperaturregelvorrichtung, dazu eingerichtet, den Sollwert für die Quellentemperatur abhängig von dem ersten Sensorsignal zu bestimmen und die Quellentemperatur abhängig von dem zweiten Sensorsignal auf den Sollwert zu regeln.

Das erste Sensorsignal beziehungsweise der Sollwert wird also insbesondere als Führungsgröße für die Regelung verwendet, während das zweite Sensorsignal eine Regelgröße des Regelkreises darstellt.

Gemäß zumindest einer Ausführungsform enthält die Temperaturregelvorrichtung ein Temperierelement, das in einer Umgebung der Lichtquelle angeordnet ist und eine Steuereinheit, die dazu eingerichtet ist, das Temperierelement in Abhängigkeit von der Filtertemperatur anzusteuern, um die Quellentemperatur zu regeln.

Das Temperierelement kann insbesondere als Kühlelement, als Heizelement oder als Kühl- und Heizelement ausgestaltet sein, beispielsweise als Peltier-Element. Das Temperierelement kann auch ein Kühlelement und ein Heizelement beinhalten.

Das Temperierelement kann beispielsweise eine aktiv kühlbare Wärmesenke oder einen aktiv kühlbaren Kühlkörper beinhalten. Beispielsweise kann das Temperierelement an einem passiven Kühlkörper oder einer passiven Wärmesenke der Lichtquelle befestigt sein beziehungsweise damit verbunden sein, um die aktive Wärmesenke zu bilden.

Die Steuereinheit ist insbesondere dazu eingerichtet, das Temperierelement in Abhängigkeit von dem ersten und dem zweiten Sensorsignal anzusteuern, um die Quellentemperatur zu regeln.

Ein von der Steuereinheit erzeugtes Steuersignal zum Ansteuern des Temperierelements kann insbesondere als Stellgröße der Regelung betrachtet werden.

Insbesondere ist die Steuereinheit dazu eingerichtet, als Steuersignal ein Differenzsignal basierend auf dem zweiten Sensorsignal und dem Sollwert zu bestimmen und das Temperierelement abhängig von dem Differenzsignal zu steuern, um die Quellentemperatur auf den Sollwert zu regeln.

Gemäß zumindest einer Ausführungsform enthält das Temperierelement wenigstens ein Peltier-Element.

Damit sind eine energieeffiziente Kühlung und eine einfache Regelbarkeit der Quellentemperatur möglich. Zudem ist durch Umkehr einer Stromrichtung zum Betrieb des Peltier-Elements ein einfacher Wechsel von Kühlen zu Heizen oder umgekehrt möglich.

Gemäß zumindest einer Ausführungsform ist die Temperaturregelvorrichtung, insbesondere sind die Steuereinheit und das Temperierelement, dazu eingerichtet, die Quellentemperatur abhängig von einem vorgegebenen ersten Parameter zu regeln, der eine temperaturabhängige Verschiebung einer charakteristischen Wellenlänge der Lichtquelle, insbesondere der Emissionswellenlänge, beschreibt.

Bei dem ersten Parameter handelt es sich insbesondere um einen Materialbeziehungsweise Bauteilparameter der Lichtquelle. Der erste Parameter kann beispielsweise in m/K beziehungsweise nm/K angegeben werden. Der erste Parameter kann beispielsweise als Drift der Emissionswellenlänge abhängig von der Quellentemperatur oder als Wellenlängenverschiebung der Lichtquelle bezeichnet werden.

Die Wellenlängenschiebung der Lichtquelle abhängig von der Temperatur bei Verwendung eines Lasers beziehungsweise einer Laserdiode als Lichtquelle geht beispielsweise darauf zurück, dass bei Erwärmung der Laserdiode sich ein Bandabstand des aktiven Materials verringert, sodass die entsprechend emittierten Photonen eine geringere Energie und dementsprechend eine höhere Wellenlänge aufweisen.

Der erste Parameter kann beispielsweise in der Look-up-Tabelle berücksichtigt sein, indem der erste Parameter bei der Zuordnung einer entsprechenden Verschiebung der Emissionswellenlänge zu einer gegebenen Abweichung der Quellentemperatur von einer vorgegebenen Nominaltemperatur für die Lichtquelle berücksichtigt wird.

Alternativ oder zusätzlich kann die Steuereinheit dazu eingerichtet sein, den Sollwert abhängig von dem ersten Parameter und der gemessenen Filtertemperatur zu berechnen. Beispielsweise kann die Steuereinheit dazu eingerichtet sein, eine Wellenlängenverschiebung des Filterelements basierend auf einem Unterschied der Filtertemperatur zu der Nominaltemperatur für das Filterelement zu berechnen und den Sollwert für die Quellentemperatur abhängig von einem Verhältnis der Wellenlängenverschiebung des Filterelements zu dem ersten Parameter zu berechnen.

In dieser Weise ist eine teilweise oder vollständige Kompensation der Wellenlängenverschiebung der Lichtquelle relativ zu dem Transmissionsspektrum des Filterelements möglich.

Gemäß zumindest einer Ausführungsform ist die Temperaturregelvorrichtung, insbesondere sind die Steuereinheit und das Temperierelement, dazu eingerichtet, die Quellentemperatur abhängig von einem vorgegebenen zweiten Parameter zu regeln, der eine temperaturabhängige Verschiebung wenigstens einer charakteristischen Wellenlänge, insbesondere des Transmissionsspektrums, des Filterelements beschreibt.

Die wenigstens eine charakteristische Wellenlänge des Filterelements kann, wie beschrieben, das gesamte Transmissionsspektrum oder einen Teil des Transmissionsspektrums des Filterelements beinhalten oder eine oder mehrere Grenzwellenlängen des Transmissionsspektrums, insbesondere des Transmissionsbandes des Filterelements, oder eine oder mehrere sonstige ausgezeichnete Wellenlängen des Transmissionsspektrums des Filterelements.

Insbesondere kann der zweite Parameter bei der oben beschriebenen Zuordnung in der Look-up-Tabelle berücksichtigt sein.

Alternativ oder zusätzlich kann die Steuereinheit dazu eingerichtet sein, den Sollwert für die Quellentemperatur abhängig von dem zweiten Parameter, dem ersten Parameter und der gemessenen Filtertemperatur zu berechnen. Insbesondere kann die Verschiebung der charakteristischen Wellenlänge des Filterelements gegeben sein durch ein Produkt aus der Abweichung der Filtertemperatur von der Nominaltemperatur für das Filterelement und dem zweiten Parameter.

Der zweite Parameter kann beispielsweise als temperaturabhängige Wellenlängenverschiebung oder Bandverschiebung des Filterelements, insbesondere des Transmissionsspektrums des Filterelements, bezeichnet werden. Der zweite Parameter kann ebenfalls in Einheiten m/K beziehungsweise nm/K angegeben werden.

Gemäß zumindest einer Ausführungsform ist der erste Parameter größer als der zweite Parameter, beispielsweise größer oder gleich einem fünffachen des zweiten Parameters.

Gemäß zumindest einer Ausführungsform ist die Temperaturregelvorrichtung, insbesondere sind die Steuereinheit und das Temperierelement, dazu eingerichtet, die Quellentemperatur derart abhängig von der Filtertemperatur zu regeln, dass eine temperaturabhängige Verschiebung der wenigstens einen charakteristischen Wellenlänge des Filterelements durch eine temperaturabhängige Verschiebung der charakteristischen Wellenlänge der Lichtquelle kompensiert wird.

Dass die bezeichneten Wellenlängenverschiebungen kompensiert werden kann insbesondere derart verstanden werden, dass beide Wellenlängenverschiebungen gleich oder näherungsweise gleich sind.

Durch die Kompensation kann die Bandbreite des Filterelements schmäler gewählt werden, was zu einer Erhöhung des Signal-Rausch-Verhältnisses führt.

Gemäß zumindest einer Ausführungsform weist das Filterelement eine Schicht oder Beschichtung auf, die auf einer aktiven Oberfläche des wenigstens einen optischen Detektors angeordnet ist, insbesondere direkt auf der aktiven Oberfläche.

Gemäß zumindest einer Ausführungsform enthält die Schicht oder Beschichtung ein Polymermaterial oder ein Glas.

Gemäß zumindest einer Ausführungsform ist das Filterelement als Bandpassfilter ausgestaltet. Die Emissionswellenlänge der Lichtquelle liegt bei einer vorgegebenen Referenztemperatur innerhalb des Transmissionsbandes des Bandpassfilters. Insbesondere liegt die Emissionswellenlänge innerhalb des Transmissionsbandes, wenn die Quellentemperatur gleich der Nominaltemperatur für die Lichtquelle ist und die Filtertemperatur gleich der Nominaltemperatur für das Filterelement.

Durch die Regelung der Quellentemperatur mittels des verbesserten Konzepts wird insbesondere erreicht, dass die Emissionswellenlänge auch bei von den Nominaltemperaturen abweichenden Temperaturen, insbesondere bei verschiedenen Umgebungstemperaturen des Sensorsystems, innerhalb des Transmissionsbandes liegt.

Gemäß einem weiteren unabhängigen Aspekt des verbesserten Konzepts wird ein Kraftfahrzeug mit einem aktiven optischen Sensorsystems nach dem verbesserten Konzept angegeben.

Gemäß einem weiteren unabhängigen Aspekt des verbesserten Konzepts wird ein Verfahren zur Temperaturregelung eines aktiven optischen Sensorsystems angegeben. Dabei weist das Sensorsystem eine Lichtquelle auf, um Licht in Richtung eines Objekts auszusenden, wenigstens einen optischen Detektor, um von dem Objekt reflektierte Anteile des Lichts zu detektieren und ein optisches Filterelement, das in einem Empfangsstrahlengang für die reflektierten Anteile des Lichts angeordnet ist. Gemäß dem Verfahren zur Temperaturregelung wird eine Quellentemperatur der Lichtquelle, mittels einer Temperaturregelvorrichtung des Sensorsystems in Abhängigkeit von einer Filtertemperatur des Filterelements geregelt, wobei die Quellentemperatur der Lichtquelle auf einen Sollwert geregelt wird, der von der Filtertemperatur abhängt.

Gemäß zumindest einer Ausführungsform des Verfahrens nach dem verbesserten Konzept wird, insbesondere mittels eines ersten Temperatursensors, ein von der Filtertemperatur abhängiges erstes Sensorsignal erzeugt. Ein von der Quellentemperatur abhängiges zweites Sensorsignal wird, insbesondere mittels eines zweiten Temperatursensors, erzeugt. Die Quellentemperatur wird mittels der Temperaturregelvorrichtung abhängig von dem ersten und dem zweiten Sensorsignal geregelt.

Gemäß zumindest einer Ausführungsform wird mittels der Temperaturregelvorrichtung ein Sollwert für die Quellentemperatur abhängig von dem ersten Sensorsignal bestimmt und die Quellentemperatur wird abhängig von dem zweiten Sensorsignal auf den Sollwert geregelt.

Gemäß zumindest einer Ausführungsform wird die Quellentemperatur mittels der Temperaturregelvorrichtung abhängig von einem vorgegebenen ersten Parameter geregelt, der eine temperaturabhängige Verschiebung einer charakteristischen Wellenlänge der Lichtquelle beschreibt.

Gemäß zumindest einer Ausführungsform wird die Quellentemperatur mittels der Temperaturregelvorrichtung abhängig von einem vorgegebenen zweiten Parameter geregelt, der eine temperaturabhängige Verschiebung wenigstens einer charakteristischen Wellenlänge des Filterelements beschreibt.

Gemäß zumindest einer Ausführungsform wird eine temperaturabhängige Verschiebung wenigstens einer charakteristischen Wellenlänge des Filterelements kompensiert, indem durch das Regeln der Quellentemperatur eine entsprechende Verschiebung einer charakteristischen Wellenlänge der Lichtquelle erzeugt wird.

Weitere Ausführungsformen des Verfahrens nach dem verbesserten Konzept ergeben sich direkt aus den verschiedenen Ausführungsformen des aktiven optischen Sensorsystems nach dem verbesserten Konzept und umgekehrt. Insbesondere kann ein Sensorsystem nach dem verbesserten Konzept dazu eingerichtet sein, ein Verfahren nach dem verbesserten Konzept auszuführen oder ein Sensorsystem nach dem verbesserten Konzept führt ein Verfahren nach dem verbesserten Konzept aus.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als erfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von denen abweichen.

In den Zeichnungen zeigen:
- Fig. 1: eine schematische Darstellung einer beispielhaften Ausführungsform eines aktiven optischen Sensorsystems nach dem verbesserten Konzept;
- Fig. 2: eine temperaturabhängige Verschiebung einer Emissionswellenlänge; und
- Fig. 3: eine temperaturabhängige Verschiebung eines Transmissionsspektrums.

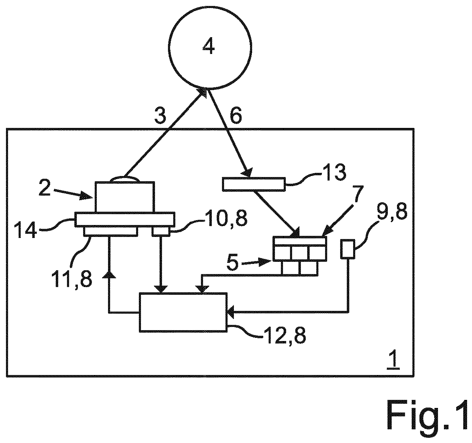

In Fig. 1 ist eine beispielhafte Ausführungsform eines aktiven optischen Sensorsystems 1 nach dem verbesserten Konzept dargestellt.

Das Sensorsystem 1 weist eine Lichtquelle 2 auf, die insbesondere als Infrarotlaserdiode ausgestaltet sein kann. Die Lichtquelle 2 kann Licht 3 in eine Umgebung des Sensorsystems 1 aussenden, wo es von einem Objekt 4 wenigstens teilweise reflektiert werden kann, sodass reflektierte Lichtanteile 6 auf das Sensorsystem 1 treffen.

Das Sensorsystem 1 weist außerdem eine oder mehrere optische Detektoren 5 auf, die beispielsweise als nebeneinander angeordnete Avalanche-Photodioden ausgestaltet sein können.

Auf einer aktiven optischen Oberfläche der Detektoren 5 ist ein optisches Filterelement 7, beispielsweise ausgestaltet als glas- oder polymerhaltige Schicht, angeordnet. Das Filterelement 7 ist insbesondere als Bandpassfilter ausgestaltet.

Die Detektoren 5 können die reflektierten Anteile 6 detektieren und basierend darauf eines oder mehrere Detektorsignale erzeugen.

Des Weiteren enthält das Sensorsystem 1 eine Steuereinheit 12, die mit den Detektoren 5 gekoppelt ist, um die von den Detektoren 5 erzeugten Detektorsignale zu empfangen und zu verarbeiten.

Das Sensorsystem 1 weist auch eine Temperaturregelvorrichtung 8 auf, welche die Steuereinheit 12 wenigstens teilweise beinhaltet.

Die Temperaturregelvorrichtung 8 weist außerdem ein Temperierelement 11 auf, das beispielsweise ein Peltier-Element enthält und insbesondere in einer Umgebung der Lichtquelle 2 angeordnet ist, sodass eine Quellentemperatur der Lichtquelle 2, insbesondere eine Sperrschichttemperatur der Laserdiode, mittels des Temperierelements 11 geregelt werden kann. Je nach Richtung des Betriebsstroms des Peltier-Elements kann das Temperierelement 11 als Kühlelement oder Heizelement fungieren.

Beispielsweise kann die Lichtquelle 2 auf einer Wärmesenke oder einem Kühlkörper 14 zur Wärmeabfuhr von durch die Lichtquelle 2 erzeugter Wärme angeordnet sein.

Beispielsweise kann das Temperierelement 11 mit dem Kühlkörper 14 verbunden sein um diesen zu kühlen und damit die Lichtquelle 2 zu kühlen.

Die Temperaturregelvorrichtung 8 weist außerdem beispielsweise einen ersten Temperatursensor 9 auf, der derart angeordnet ist, dass er eine Temperatur des Filterelements 7 bestimmen kann beziehungsweise basierend auf der Filtertemperatur ein erstes Sensorsignal erzeugen kann. Der erste Temperatursensor 9 ist mit der Steuereinheit 12 gekoppelt, um das erste Sensorsignal an die Steuereinheit 12 zu übertragen.

Die Temperaturregelvorrichtung 8 weist außerdem beispielsweise einen zweiten Temperatursensor 10 auf, der abhängig von der Quellentemperatur der Lichtquelle 2 ein zweites Sensorsignal erzeugen kann. Der zweite Temperatursensor 10 ist mit der Steuereinheit 12 gekoppelt, um das zweite Sensorsignal an die Steuereinheit 12 zu übertragen.

Der zweite Temperatursensor 10 kann beispielsweise ebenfalls an dem Kühlkörper 14 befestigt sein. Anhand eines thermischen Widerstands der Lichtquelle 2 sowie gegebenenfalls des Übergangs zwischen Kühlkörper 14 und Lichtquelle 2 kann von der Temperatur des Kühlkörpers 14 beispielsweise auf eine Sperrschichttemperatur der Lichtquelle 2 geschlossen werden.

Optional kann das Sensorsystem 1 eine Ablenkvorrichtung 13 beinhalten, die die reflektierten Anteile 6 des Lichts 3 auf die aktive Oberfläche der Detektoren 5 lenken kann. Dazu kann die Ablenkvorrichtung 13 beispielsweise einen Spiegel, insbesondere einen beweglich gelagerten oder drehbar angeordneten Spiegel, beinhalten.

Im Folgenden wird die Funktionsweise des Sensorsystems 1 anhand eines nicht beschränkenden Beispiels unter Verwendung konkreter Zahlenwerte näher erläutert. Weitere Ausführungsformen folgen unmittelbar aus diesen Erläuterungen.

Im dem Ausführungsbeispiel kann beispielsweise eine erste Umgebungstemperatur 10 °C betragen. Im Betrieb des Sensorsystems 1 kann dies beispielsweise zu einer ersten Filtertemperatur t_{F1} des Filterelements 7 von 45 °C führen. Da sich die Lichtquelle 2 durch deren Betrieb in der Regel stärker erhitzt als das Filterelement 7, liegt dort eine erste Quellentemperatur t_{L1} vor, die größer ist als die erste Filtertemperatur t_{F1}, und beispielsweise 60 °C betragen kann.

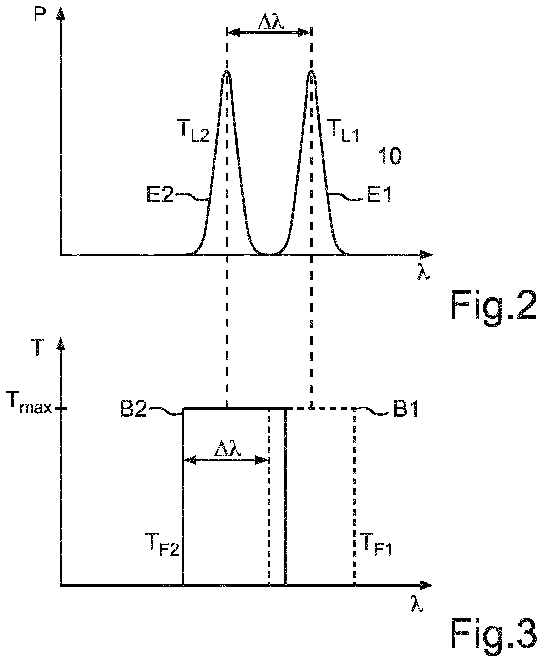

Das Filterelement 7 ist beispielsweise derart ausgewählt, dass eine Emissionswellenlänge der Lichtquelle 2 bei der ersten Quellentemperatur t_{L1} und der ersten Filterelement t_{F1} innerhalb eines ersten Filterbandes B1 des Filterelements 7 liegt, wie beispielsweise in den Fig. 2 und 3 dargestellt.

Fig. 2 zeigt dabei schematisch eine Strahlungsleistung P des ausgesendeten Lichts 3 der Lichtquelle 2 abhängig von der Wellenlänge λ. Im Falle eines Lasers hat die entsprechende Wellenlängenverteilung einen scharfen Peak bei der Emissionswellenlänge, wie in einem ersten Emissionsspektrum E1 der Lichtquelle 2 angedeutet. Die Breite der Verteilung ist in Fig. 2 dabei überproportional groß dargestellt.

In Fig. 3 ist der Transmissionsgrad des Filterelements 7 als Funktion der Wellenlänge λ dargestellt. Insbesondere ist das erste Transmissionsband B1 schematisch als rechteckiges Band dargestellt, wobei in realen Situationen eine mehr oder weniger starke Abweichung von der rechteckigen Form gegeben sein kann.

In dem Ausführungsbeispiel wird angenommen, dass sich die Umgebungstemperatur von 10 °C auf beispielsweise -40 °C verringert. In diesem Fall kann sich die Filtertemperatur beispielsweise auf eine zweite Filtertemperatur von beispielsweise t_{F2} = -5 °C verringern.

Würde die Quellentemperatur der Lichtquelle 2 nicht geregelt, so würde sich beispielsweise eine Quellentemperatur von beispielsweise 10 °C einstellen.

Durch die Verringerung der Filtertemperatur um 50 K ergibt sich eine Verschiebung des ersten Transmissionsbandes B1 um einen Wert Δλ zu einem resultierenden zweiten Transmissionsband B2, wie schematisch in Fig. 3 dargestellt.

Die temperaturabhängige Verschiebung des Transmissionsbandes des Filterelements 7 kann dabei beispielsweise in der Größenordnung von 0,05 nm/K liegen, was zu Δλ ≈ - 2,5 nm führen würde.

Im Falle eines Lasers als Lichtquelle 2 ist zunächst eine Verschiebung der Emissionswellenlänge abhängig von der Temperatur zu erwarten, die dort deutlich größer ist als Δλ. Beispielsweise kann die temperaturabhängige Wellenlängenverschiebung der Lichtquelle 2 in der Größenordnung 0,5 nm/K liegen. Ohne Regelung der Quellentemperatur könnte dies dazu führen, dass sich die Emissionswellenlänge aus dem Transmissionsband des Filterelements 7 heraus bewegt.

Die Steuereinheit 12 ist dazu eingerichtet, abhängig von den Sensorsignalen der Temperatursensoren 9, 10 ein Steuersignal zu erzeugen und dieses an das Temperierelement 11 zu übertragen, sodass eine Regelschleife entsteht, mittels der die Steuereinheit 12 die Quellentemperatur der Lichtquelle 2 entsprechend der Filtertemperatur regelt.

Um die unterschiedliche Verschiebung des Transmissionsspektrums beziehungsweise des Emissionsspektrums vollständig oder teilweise zu kompensieren, kann beispielsweise eine Regelung der Quellentemperatur erfolgen, die der durch die Änderung der Umgebungstemperatur bedingten Änderung der Quellentemperatur entgegenwirkt.

Im konkreten Ausführungsbeispiel könnte die Quellentemperatur zum Beispiel auf eine zweite Quellentemperatur von t_{L2} = 45 °C geregelt werden. Wie anhand der oben angegebenen Zahlenwerte leicht überprüft werden kann, ergibt sich in diesem Fall eine Verschiebung des Emissionsspektrums der Lichtquelle 2 ebenfalls um Δλ ≈ -2,5 nm auf ein zweites Emissionsspektrum E2, wie in Fig. 2 gezeigt.

Folglich liegt das zweite Emissionsspektrum E2 auch bei der Umgebungstemperatur von -40 °C vollständig innerhalb des Transmissionsbandes B2 des Filterelements 7.

In anderen Ausführungsformen kann die Quellentemperatur auf einen Wert zwischen 10 °C und 45 °C geregelt werden, um die Verschiebung der Wellenlänge wenigstens teilweise zu kompensieren.

Dementsprechend kann die Breite des Transmissionsbandes des Filterelements 7 signifikant kleiner gewählt werden, als dies ohne eine Temperaturregelung gemäß dem verbesserten Konzept möglich wäre.

Wie beschrieben wurde kann dadurch ein Signal-Rausch-Verhältnis für die Messung mittels des Sensorsystems vergrößert werden, was eine Genauigkeit und Zuverlässigkeit des Sensorsystems erhöht.

Ein weiterer zusätzlicher positiver Nebeneffekt der stärkeren Kühlung der Lichtquelle kann beispielsweise eine sich dadurch ergebende verlängerte Lebensdauer der Lichtquelle sein.

## Patentansprüche

1. Aktives optisches Sensorsystem mit Temperaturregelung, das Sensorsystem (1) aufweisend
- eine Lichtquelle (2), dazu eingerichtet, Licht (3) in Richtung eines Objekts (4) auszusenden;
- wenigstens einen optischen Detektor (5), dazu eingerichtet, von dem Objekt (4) reflektierte Anteile (6) des Lichts (3) zu detektieren; und
- ein optisches Filterelement (7), das in einem Empfangsstrahlengang für die reflektierten Anteile (6) des Lichts (3) angeordnet ist;
**dadurch gekennzeichnet, dass**
- das Sensorsystem (1) eine Temperaturregelvorrichtung (8) aufweist, die dazu eingerichtet ist, eine Quellentemperatur der Lichtquelle (2) in Abhängigkeit von einer Filtertemperatur des Filterelements (7) zu regeln, wobei die Quellentemperatur der Lichtquelle (2) auf einen Sollwert geregelt wird, der von der Filtertemperatur abhängt.

2. Aktives optisches Sensorsystem nach Anspruch 1, **dadurch gekennzeichnet, dass** die Temperaturregelvorrichtung (8)
- einen ersten Temperatursensor (9) enthält, der eingerichtet und angeordnet ist, ein von der Filtertemperatur abhängiges erstes Sensorsignal zu erzeugen;
- einen zweiten Temperatursensor (10) enthält, der eingerichtet und angeordnet ist, ein von der Quellentemperatur abhängiges zweites Sensorsignal zu erzeugen; und
- dazu eingerichtet ist, die Quellentemperatur abhängig von dem ersten und dem zweiten Sensorsignal zu regeln.

3. Aktives optisches Sensorsystem nach Anspruch 2, **dadurch gekennzeichnet, dass** die Temperaturregelvorrichtung (8) dazu eingerichtet ist,
- den Sollwert für die Quellentemperatur abhängig von dem ersten Sensorsignal zu bestimmen; und
- die Quellentemperatur abhängig von dem zweiten Sensorsignal auf den Sollwert zu regeln.

4. Aktives optisches Sensorsystem nach einem der Ansprüche 1 bis 3, **dadurch gekennzeichnet, dass** die Temperaturregelvorrichtung (8)
- ein Temperierelement (11) enthält, das in einer Umgebung der Lichtquelle (2) angeordnet ist; und
- eine Steuereinheit (12) enthält, die dazu eingerichtet ist, das Temperierelement (11) in Abhängigkeit von der Filtertemperatur anzusteuern, um die Quellentemperatur zu regeln.

5. Aktives optisches Sensorsystem nach Anspruch 4, **dadurch gekennzeichnet, dass** das Temperierelement (11) als Peltier-Element ausgestaltet ist.

6. Aktives optisches Sensorsystem nach einem der Ansprüche 1 bis 5, **dadurch gekennzeichnet, dass** die Temperaturregelvorrichtung (8) dazu eingerichtet ist, die Quellentemperatur abhängig von einem vorgegebenen ersten Parameter zu regeln, der eine temperaturabhängige Verschiebung einer charakteristischen Wellenlänge der Lichtquelle (2) beschreibt.

7. Aktives optisches Sensorsystem nach einem der Ansprüche 1 bis 6, **dadurch gekennzeichnet, dass** die Temperaturregelvorrichtung (8) dazu eingerichtet ist, die Quellentemperatur abhängig von einem vorgegebenen zweiten Parameter zu regeln, der eine temperaturabhängige Verschiebung wenigstens einer charakteristischen Wellenlänge des Filterelements (7) beschreibt.

8. Aktives optisches Sensorsystem nach einem der Ansprüche 1 bis 5, **dadurch gekennzeichnet, dass** die Temperaturregelvorrichtung (8) dazu eingerichtet ist, die Quellentemperatur derart zu regeln, dass eine temperaturabhängige Verschiebung wenigstens einer charakteristischen Wellenlänge des Filterelements (7) durch eine temperaturabhängige Verschiebung einer charakteristischen Wellenlänge der Lichtquelle (2) kompensiert wird.

9. Aktives optisches Sensorsystem nach einem der Ansprüche 1 bis 8, **dadurch gekennzeichnet, dass** das Filterelement (7) eine Schicht aufweist, die auf einer aktiven Oberfläche des wenigstens einen optischen Detektors (5) angeordnet ist.

10. Aktives optisches Sensorsystem nach einem der Ansprüche 1 bis 9, **dadurch gekennzeichnet, dass** - das Filterelement (7) als Bandpassfilter ausgestaltet ist; - eine Emissionswellenlänge der Lichtquelle (2) bei einer vorgegebenen Referenztemperatur innerhalb eines Bandes des Bandpassfilters liegt.

11. Verfahren zur Temperaturregelung eines aktiven optischen Sensorsystems (1), das Sensorsystem (1) aufweisend
- eine Lichtquelle (2), um Licht (3) in Richtung eines Objekts (4) auszusenden;
- wenigstens einen optischen Detektor (5), um von dem Objekt (4) reflektierte Anteile (6) des Lichts (3) zu detektieren; und
- ein optisches Filterelement (7), das in einem Empfangsstrahlengang für die reflektierten Anteile (6) des Lichts (3) angeordnet ist;
**dadurch gekennzeichnet, dass** eine Quellentemperatur der Lichtquelle (2) mittels einer Temperaturregelvorrichtung (8) in Abhängigkeit von einer Filtertemperatur des Filterelements (7) geregelt wird, wobei die Quellentemperatur der Lichtquelle (2) auf einen Sollwert geregelt wird, der von der Filtertemperatur abhängt.

12. Verfahren nach Anspruch 11, **dadurch gekennzeichnet, dass**
- ein von der Filtertemperatur abhängiges erstes Sensorsignal erzeugt wird;
- ein von der Quellentemperatur abhängiges zweites Sensorsignal erzeugt wird; und
- die Quellentemperatur mittels der Temperaturregelvorrichtung (8) abhängig von dem ersten und dem zweiten Sensorsignal geregelt wird.

13. Verfahren nach Anspruch 12, **dadurch gekennzeichnet, dass** mittels der Temperaturregelvorrichtung (8)
- den Sollwert für die Quellentemperatur abhängig von dem ersten Sensorsignal bestimmt wird; und
- die Quellentemperatur abhängig von dem zweiten Sensorsignal auf den Sollwert geregelt wird.

14. Verfahren nach einem der Ansprüche 11 bis 13, **dadurch gekennzeichnet, dass** die Quellentemperatur mittels der Temperaturregelvorrichtung (8)
- Abhängig von einem vorgegebenen ersten Parameter geregelt wird, der eine temperaturabhängige Verschiebung einer charakteristischen Wellenlänge der Lichtquelle (2) beschreibt; und / oder
- Abhängig von einem vorgegebenen zweiten Parameter geregelt wird, der eine temperaturabhängige Verschiebung wenigstens einer charakteristischen Wellenlänge des Filterelements (7) beschreibt.

15. Verfahren nach einem der Ansprüche 11 bis 13, **dadurch gekennzeichnet, dass** eine temperaturabhängige Verschiebung wenigstens einer charakteristischen Wellenlänge des Filterelements (7) kompensiert wird, indem durch das Regeln der Quellentemperatur eine entsprechende Verschiebung einer charakteristischen Wellenlänge der Lichtquelle (2) erzeugt wird.

## Claims

1. Active optical sensor system with temperature control, the sensor system (1) comprising
- a light source (2) designed to emit light (3) in the direction of an object (4);
- at least one optical detector (5) designed to detect reflected portions (6) of the light (3) from the object (4); and
- an optical filter element (7) arranged in a receiving beam path for the reflected portions (6) of the light (3);
**characterised in that**
- the sensor system (1) has a temperature control device (8) which is designed to control a source temperature of the light source (2) as a function of a filter temperature of the filter element (7), wherein the source temperature of the light source (2) is controlled to a setpoint value which depends on the filter temperature.

2. Active optical sensor system according to claim 1, **characterised in that** the temperature control device (8)
- includes a first temperature sensor (9) that is set up and arranged to generate a first sensor signal that depends on the filter temperature;
- includes a second temperature sensor (10) that is set up and arranged to generate a second sensor signal dependent on the source temperature; and
- is arranged to control the source temperature as a function of the first and second sensor signals.

3. Active optical sensor system according to claim 2, **characterised in that** the temperature control device (8) is designed to
- determining the setpoint for the source temperature depending on the first sensor signal; and
- regulate the source temperature to the setpoint value depending on the second sensor signal.

4. Active optical sensor system according to one of claims 1 to 3, **characterised in that** the temperature control device (8)
- includes a temperature control element (11) which is arranged in the vicinity of the light source (2); and
- includes a control unit (12) that is designed to control the temperature control element (11) depending on the filter temperature in order to regulate the source temperature.

5. Active optical sensor system according to claim 4, **characterised in that** the temperature control element (11) is designed as a Peltier element.

6. Active optical sensor system according to one of claims 1 to 5, **characterised in that** the temperature control device (8) is designed to control the source temperature depending on a predetermined first parameter which describes a temperature-dependent shift of a characteristic wavelength of the light source (2).

7. Active optical sensor system according to one of claims 1 to 6, **characterised in that** the temperature control device (8) is designed to control the source temperature depending on a predetermined second parameter which describes a temperature-dependent shift of at least one characteristic wavelength of the filter element (7).

8. Active optical sensor system according to one of claims 1 to 5, **characterised in that** the temperature control device (8) is designed to control the source temperature in such a way that a temperature-dependent shift of at least one characteristic wavelength of the filter element (7) is compensated by a temperature-dependent shift of a characteristic wavelength of the light source (2).

9. Active optical sensor system according to one of claims 1 to 8, **characterised in that** the filter element (7) has a layer which is arranged on an active surface of the at least one optical detector (5).

10. Active optical sensor system according to one of claims 1 to 9, **characterised in that**
- the filter element (7) is designed as a bandpass filter; - an emission wavelength of the light source (2) at a predetermined reference temperature lies within a band of the bandpass filter.

11. Method for temperature control of an active optical sensor system (1), the sensor system (1) comprising
- a light source (2) for emitting light (3) in the direction of an object (4);
- at least one optical detector (5) for detecting portions of the light (3) reflected by the object (4) (6) of the light (3) reflected from the object (4); and
- an optical filter element (7) arranged in a receiving beam path for the reflected portions (6) of the light (3);
**characterised in that** a source temperature of the light source (2) is controlled by means of a temperature control device (8) as a function of a filter temperature of the filter element (7), wherein the source temperature of the light source (2) is controlled to a setpoint value which depends on the filter temperature.

12. Method according to claim 11, **characterised in that**
- a first sensor signal dependent on the filter temperature is generated;
- a second sensor signal dependent on the source temperature is generated; and
- the source temperature is controlled by means of the temperature control device (8) depending on the first and second sensor signals are regulated w rd

13. Method according to claim 12, **characterised in that** by means of the temperature control device (8)
- the the setpoint for the source temperature is determined depending on the first sensor signal; and
- the source temperature is controlled to the setpoint value depending on the second sensor signal.

14. Method according to one of claims 11 to 13, **characterised in that** the source temperature is controlled by means of the temperature control device (8)
- depending on a predetermined first parameter which describes a temperature-dependent shift of a characteristic wavelength of the light source (2); and/or
- is controlled depending on a predetermined second parameter which describes a temperature-dependent shift of at least one characteristic wavelength of the filter element (7).

15. Method according to one of claims 11 to 13, **characterised in that** a temperature-dependent shift of at least one characteristic wavelength of the filter element (7) is compensated by generating a corresponding shift of a characteristic wavelength of the light source (2) by controlling the source temperature.

## Revendications

1. Système de capteur optique actif avec régulation de température, le système de capteur (1) comprenant
- une source lumineuse (2) conçue pour émettre de la lumière (3) en direction d'un objet (4)
- au moins un détecteur optique (5) adapté pour détecter les ; et
- un élément de filtre optique (7) disposé dans un trajet de faisceau de réception pour les parties réfléchies (6) de la lumière (3) ;
**caractérisé en ce que**
- le système de capteur (1) comprend un dispositif de régulation de température (8) qui est conçu pour réguler la température de la source lumineuse (2) en fonction de la température du filtre (7), la température de la source lumineuse (2) étant régulée à une valeur de consigne qui dépend de la température du filtre.

2. Système de capteur optique actif selon la revendication 1, **caractérisé en ce que** le dispositif de régulation de température (8)
- comprend un premier capteur de température (9) qui est configuré et agencé pour générer un premier signal de capteur dépendant de la température du filtre ;
- un deuxième capteur de température (10) qui est conçu et agencé pour générer un deuxième signal de capteur dépendant de la température de la source ; et
- est conçu pour réguler la température de la source en fonction des premier et deuxième signaux de capteur.

3. Système de capteur optique actif selon la revendication 2, **caractérisé en ce que** le dispositif de régulation de température (8) est conçu pour
- déterminer la déterminer la valeur de consigne pour la température de la source en fonction du premier signal de capteur ; et
- réguler la température de la source à la valeur de consigne en fonction du deuxième signal du capteur

4. Système de capteur optique actif selon l'une des revendications 1 à 3, **caractérisé en ce que** le dispositif de régulation de température (8)
- comprend un élément de régulation de température (11) qui est disposé dans un environnement de la source lumineuse (2) ; et
- comprend une unité de commande (12) qui est conçue pour commander l'élément de régulation de température (11) en fonction de la température du filtre afin de réguler la température de la source.

5. Système de capteur optique actif selon la revendication 4, **caractérisé en ce que** l'élément de régulation de température (11) est conçu comme un élément Peltier.

6. Système de capteur optique actif selon l'une des revendications 1 à 5, **caractérisé en ce que** le dispositif de régulation de température (8) est conçu pour réguler la température de la source en fonction d'un premier paramètre prédéfini qui décrit un décalage dépendant de la température d'une longueur d'onde caractéristique de la source lumineuse (2).

7. Système de capteur optique actif selon l'une des revendications 1 à 6, **caractérisé en ce que** le dispositif de régulation de température (8) est conçu pour réguler la température de la source en fonction d'un deuxième paramètre prédéfini qui décrit un décalage dépendant de la température d'au moins une longueur d'onde caractéristique de l'élément filtrant (7).

8. Système de capteur optique actif selon l'une des revendications 1 à 5, **caractérisé en ce que** le dispositif de régulation de température (8) est conçu pour réguler la température de la source de telle sorte qu'un décalage dépendant de la température d'au moins une longueur d'onde caractéristique de l'élément filtrant (7) soit compensé par un décalage dépendant de la température d'une longueur d'onde caractéristique de la source lumineuse (2).

9. Système de capteur optique actif selon l'une des revendications 1 à 8, **caractérisé en ce que** l'élément filtrant (7) comporte une couche qui est disposée sur une surface active d'au moins un détecteur optique (5).

10. Système de capteur optique actif selon l'une des revendications 1 à 9, **caractérisé en ce que** - l'élément filtrant (7) est conçu comme un filtre passe-bande ; - une longueur d'onde d'émission de la source lumineuse (2) à une température de référence prédéfinie se situe à l'intérieur d'une bande du filtre passe-bande.

11. Procédé de régulation de la température d'un système de capteur optique actif (1), le système de capteur (1) comprenant
- une source lumineuse (2) pour émettre de la lumière (3) en direction d'un objet (4) ;
- au moins un détecteur optique (5) pour détecter les composantes de la lumière (3) réfléchies par l'objet (4) (6) de la lumière (3) réfléchies par l'objet (4) ; et
- un élément de filtre optique (7) disposé dans un trajet de rayonnement de réception pour les parties réfléchies (6) de la lumière (3) ;
**caractérisé en ce qu'**une température de source de la source lumineuse (2) est régulée au moyen d'un dispositif de régulation de température (8) en fonction d'une température de filtre de l'élément filtrant (7), la température de source de la source lumineuse (2) étant régulée à une valeur de consigne qui dépend de la température de filtre.

12. Procédé selon la revendication 11, **caractérisé en ce qu'**
- un premier signal de capteur dépendant de la température du filtre est généré ;
- un deuxième signal de capteur dépendant de la température de la source est généré ; et
- la température de la source est régulée au moyen du dispositif de régulation de température (8) en fonction de régulé par le premier et le deuxième signal de capteur w rd

13. Procédé selon la revendication 12, **caractérisé en ce que**, au moyen du dispositif de régulation de température (8)
- le valeur de consigne pour la température de la source est déterminée en fonction du premier signal du capteur ; et
- la température de la source est régulée à la valeur de consigne en fonction du deuxième signal du capteur

14. Procédé selon l'une des revendications 11 à 13, **caractérisé en ce que** la température de la source est régulée au moyen du dispositif de régulation de température (8)
- en fonction d'un premier paramètre prédéfini qui décrit un décalage dépendant de la température d'une longueur d'onde caractéristique de la source lumineuse (2) ; et/ou
- en fonction d'un deuxième paramètre prédéfini qui décrit un décalage dépendant de la température d'au moins une longueur d'onde caractéristique de l'élément filtrant (7).

15. Procédé selon l'une des revendications 11 à 13, **caractérisé en ce qu'**une le décalage, dépendant de la température, d'au moins une longueur d'onde caractéristique de l'élément filtrant (7) est compensé en générant, par la régulation de la température de la source, un décalage correspondant d'une longueur d'onde caractéristique de la source lumineuse (2).
